# FASCICULE DE BREVET EUROPEEN

(11) **EP 1 042 847 B1**
(45) Date de publication et mention de la délivrance du brevet: **26.09.2001**
(21) Numéro de dépôt: 98963608.9
(22) Date de dépôt: 23.12.1998
(51) Int. Cl.: H01S 3/06

(54) **MICROLASER A DECLENCHEMENT PASSIF ET A POLARISATION CONTROLEE**
PASSIV GÜTEGESCHALTETER MIKROLASER MIT GEREGELTER POLARISATION
PASSIVE Q-SWITCHED MICROLASER WITH CONTROLLED POLARISATION

(30) Priorité: 24.12.1997 FR 9716518
(43) Date de publication de la demande: 11.10.2000
(73) Titulaire: COMMISSARIAT A L'ENERGIE ATOMIQUE, 75015 Paris (FR)
(72) Inventeur: FERRAND, Bernard, F-38340 Voreppe (FR); CHAMBAZ, Bernard, F-38180 Seyssins (FR); FULBERT, Laurent, F-38500 Voiron (FR); MARTY, Jean, F-38180 Seyssins (FR)
(74) Mandataire: Audier, Philippe André
(86) Numéro de dépôt international: FR9802848
(87) Numéro de publication internationale: WO9934486

(56) Documents cités:
- EP-A- 0 653 824
- US-A- 5 394 413
- US-A- 5 414 724
- LIU H ET AL: "SINGLE-FREQUENCY Q-SWITCHED CR-ND: YAG LASER OPERATING AT 946-NM WAVELENGTH" IEEE JOURNAL OF SELECTED TOPICS IN QUANTUM ELECTRONICS, vol. 3, no. 1, février 1997, pages 26-28, XP000694385

## Description

La présente invention a trait à une cavité laser à déclenchement passif par absorbant saturable et à polarisation contrôlée, et à un laser en particulier un microlaser comprenant ladite cavité et des moyens de pompage de cette cavité.

L'invention concerne également un procédé de fabrication dudit microlaser.

Le domaine de l'invention peut de manière très générale être défini comme étant celui des lasers déclenchés et en particulier des microlasers déclenchés pompés par diode qui se développent très intensément aujourd'hui.

Un des avantages du microlaser réside dans sa structure en un empilement de multicouches. Le milieu actif laser est constitué par un matériau de faible épaisseur par exemple, entre 150-1 000 µm et de petites dimensions (quelques mm²), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de. la micro-électronique autorise une production de masse de ces microlasers à très faible coût.

Les microlasers ont de nombreuses applications, dans des domaines aussi variés que l'industrie automobile, l'environnement, l'instrumentation scientifique, la télémétrie, etc...

Les microlasers connus ont, en général, une émission continue de quelques dizaines de mW de puissance. Cependant, la plupart des applications citées ci-dessus, nécessitent des puissances crêtes (puissance instantanée) de quelques kW délivrées pendant 10⁻⁸ à 10⁻⁹ secondes, avec une puissance moyenne de quelques dizaines de mW.

Dans les lasers solides, on peut obtenir de telles puissances crêtes élevées en les faisant fonctionner en mode pulsé à des fréquences variant entre 10 et 10⁴ Hz. Pour cela, on utilise des procédés bien connus de déclenchement, par exemple par « Q-switch ».

De façon plus précise, déclencher une cavité laser consiste à rajouter dans celle-ci des pertes variables dans le temps qui vont empêcher l'effet laser pendant un certain temps, durant lequel l'énergie de pompage est stockée dans le niveau excité du matériau à gain. Ces pertes sont brusquement diminuées, à des moments précis, libérant ainsi l'énergie emmagasinée en un temps très court (« giant pulse » ou impulsion géante). On atteint ainsi une puissance crête élevée.

Dans le cas d'un déclenchement dit actif, la valeur des pertes est pilotée de façon externe par l'utilisateur (exemple : miroir de cavité tournant, acousto-optique ou électro-optique intracavité changeant soit le trajet du faisceau, soit son état de polarisation). La durée de stockage, l'instant d'ouverture de la cavité, ainsi que le taux de répétition peuvent être choisis indépendamment. En contrepartie, cela nécessite une électronique adaptée et complique le système laser.

Un microlaser déclenché activement est décrit par exemple dans le document EP-A-724 316.

Dans le cas d'un déclenchement dit passif, les pertes variables sont introduites dans la cavité sous forme d'un matériau (appelé Absorbant Saturable - A. S. -) qui est fortement absorbant (transmission Tmin) à la longueur d'onde laser, à faible densité de puissance, et qui devient pratiquement transparent (transmission Tmax) lorsque cette densité dépasse un certain seuil qu'on appelle intensité de saturation de l'A. S.

L'énorme avantage du déclenchement passif est qu'il ne nécessite aucune électronique de pilotage, et que donc les impulsions peuvent être générées sans intervention extérieure.

Pour ce type de fonctionnement, dit « déclenchement passif », l'utilisateur peut choisir, d'une part, la transmission minimum (Tmin) de l'absorbant saturable, afin de l'adapter au pompage disponible et, d'autre part, la cavité laser, par l'intermédiaire de la géométrie et de la transmission du miroir de sortie.

Une fois ces paramètres fixés, le système a un point de fonctionnement caractérisé par la durée des impulsions (« pulses ») émises, la fréquence de répétition, et la puissance émise, ainsi que l'énergie par impulsion (« pulse »).

Les caractéristiques telles que l'énergie et la durée de l'impulsion laser dépendent de celles de l'absorbant saturable et de l'oscillateur.

Par contre, la fréquence de répétition des impulsions est directement proportionnelle à la puissance de la diode laser de pompe. Le faisceau laser obtenu présente des caractéristiques presque parfaites: généralement monomode transverse et longitudinal, faisceau gaussien limité par la diffraction.

Les monocristaux utilisés comme absorbant saturable (A. S.) doivent donc présenter des caractéristiques bien précises qui sont obtenues par un contrôle très précis des substitutions et de l'épaisseur du matériau.

Les microlasers, actuellement fabriqués, tels que les microlasers déclenchés passivement comprennent généralement un milieu ou matériau actif solide qui peut être constitué d'un matériau de base choisi, par exemple parmi Y₃Al₅O₁₂ (YAG), LaMgAl₁₁O₉ (LMA), YVO₄, Y₂SiO₅, YLiF₄ et GdVO₄ dopés avec un élément tel que l'Erbium (Er), l'Ytterbium (Yb), le Néodyme (Nd), le Thulium (Tm), l'Holmium (Ho), ou codopés par un mélange de plusieurs de ces éléments, tels que Er et Yb, ou Tm et Ho.

Les microlasers fonctionnent à différentes longueurs d'ondes suivant leur substitution, ainsi leur longueur d'onde d'émission est autour de 1,06 µm, lorsque la matière active est dopée par Nd³⁺, autour de 1,55 µm, lorsqu'elle est dopée par Er³⁺, Yb³⁺, et autour de 2 µm, lorsqu'elle est dopée par Tm³⁺ et Ho³⁺.

Par ailleurs, des absorbants saturables connus contiennent des molécules organiques responsables de l'absorption. Ces matériaux, qui se présentent sous forme liquide ou plastique, sont très souvent de mauvaise qualité optique, vieillissent très vite et ont une mauvaise tenue au flux laser.

Des matériaux solides massifs sont aussi utilisés en tant qu'absorbants saturables. Par exemple pour les lasers émettant autour de 1 µm, dont la matière active est constituée de YAG avec des ions actifs Nd³⁺ ou Yb³⁺, on peut utiliser des cristaux de LiF : F₂ comportant des centres colorés responsables du comportement d'absorbant saturable du matériau et qui ont une durée de vie limitée, ou bien encore certains cristaux massifs dopés au Cr⁴⁺ qui présentent une absorption saturable autour de 1 µm.

Les absorbants saturables massifs présentent notamment l'inconvénient d'une concentration en ion absorbant limité, qui nécessite l'emploi d'une grande épaisseur de matériau.

Pour remédier aux problèmes posés par les absorbants saturables massifs, le document FR-A-2 712 743 décrit une cavité laser à milieu actif solide dans lequel l'absorbant saturable est réalisé sous la forme d'une couche mince monocristalline.

La forme de couche mince permet notamment de minimiser les pertes à l'intérieur de la cavité laser qui sont dues à la forme massive de l'absorbant saturable classique.

En outre, il est possible de déposer la couche mince sur des substrats de forme et de dimensions variées.

Enfin, la forme de couche mince permet également de réaliser un gain de place à l'intérieur de la cavité laser.

La couche mince est, dans ce document, réalisée de préférence par épitaxie en phase liquide. Une telle technique de dépôt permet notamment d'accéder à des concentrations en dopants plus élevées que les procédés classiques de croissance de cristaux massifs, c'est-à-dire les procédés tels que Czochralski, Bridgman...

Elle permet également d'élaborer plus facilement des couches monocristallines dopées par différents ions. Par ailleurs, l'épitaxie en phase liquide (EPL) est le seul procédé classique qui permette d'obtenir des couches monocristallines d'épaisseurs importantes supérieures, par exemple à 100 µm.

Dans ce document ainsi que dans le document EP-A-0 653 824, il est également décrit le dépôt par épitaxie en phase liquide de la couche mince d'absorbant saturable, directement sur le matériau actif laser jouant le rôle de substrat.

Pour cela, il faut que le matériau actif soit de même structure que le matériau absorbant saturable et que l'épitaxie en phase liquide de ce matériau soit réalisable.

A ce jour, seul Y₃Al₅O₁₂ (YAG) remplit ces conditions.

Ainsi un microlaser (ou laser puce) classique déclenché passivement est constitué généralement d'un matériau actif laser par exemple en YAG : Nd qui est le milieu actif émetteur de lumière émettant à 1,06 µm, sur lequel est épitaxiée une couche par exemple de YAG : Cr⁴⁺ plus ou moins épaisse et plus ou moins concentrée en Cr⁴⁺ suivant les performances dérivées.

Le procédé de fabrication d'un tel microlaser est décrit dans le brevet EP-A-0 653 824 déjà mentionné.

Après épitaxie de YAG : Cr⁴⁺ sur le substrat de YAG : Nd, une étape de polissage permet d'obtenir une lame ayant le parallélisme, la planéité et l'épaisseur voulus.

Les miroirs d'entrée et de sortie de la cavité laser, formés par un empilement de couches diélectriques, sont ensuite déposés sur les faces de la lame.

La lame est enfin découpée en microlasers élémentaires. Plusieurs centaines de microlasers peuvent ainsi être fabriqués de façon collective dans une seule lame.

Il est à noter que, dans tous les cas, le cristal émetteur YAG : Nd est orienté suivant l'axe [111], qui est l'axe de croissance normale des grenats, et qui permet d'obtenir un rendement laser maximum.

Le YAG: Cr⁴⁺ épitaxié a donc cette même orientation, le cristal émetteur en YAG : Nd jouant le rôle de substrat.

De ce fait et malgré tous les avantages qu'il présente, le procédé de fabrication classique de microlasers tel qu'il est décrit ci-dessus ne permet pas de contrôler la polarisation du faisceau des microlasers.

En effet, les microlasers fabriqués dans des cristaux orientés [111] ont une direction de polarisation qui dépend généralement des contraintes résiduelles engendrées par l'épitaxie. La direction de polarisation n'est pas constante sur toute la surface du substrat ou lame dans lequel les microlasers ont découpés.

Il existe cependant des méthodes pour fixer la polarisation du microlaser en appliquant une contrainte sur une des faces latérales du microlaser. Mais dans ce cas, il faut prévoir un montage permettant d'appliquer une contrainte sur chaque microlaser élémentaire, ce qui est incompatible avec un procédé de fabrication collective.

Par ailleurs, dans les dispositifs classiques, des cristaux massifs de YAG : Cr⁴⁺ sont utilisés comme absorbants saturables et sont placés dans la cavité laser le plus près possible du cristal émetteur. Dans ce cas leurs dimensions sont de l'ordre de quelques millimètres et les cristaux de YAG : Cr⁴⁺ sont généralement orientés suivant l'axe cristallographique [100]. En effet, le maximum de satùration est obtenu lorsque le faisceau incident est polarisé parallèlement à un axe cristallographique du cristal. Les cavités laser ainsi obtenues ne présentent jamais un faisceau laser dont la polarisation peut être définie à l'avance. Il n'y a donc pas de possibilités de prévoir quelle sera la polarisation du faisceau émis avant de le tester.

Or l'obtention d'un faisceau polarisé linénairement est très importante dans de nombreuses applications comme l'optique non linéaire en général et le doublage de fréquence en particulier.

Dans l'état actuel de la technique, il n'est pas possible de fabriquer collectivement des microlasers doublés en fréquence. Le cristal non linéaire qui assure la conversion de fréquence doit être tourné en fonction de la polarisation du faisceau de chaque microlaser, sans connaissance a priori de la direction de polarisation du faisceau.

L'inhomogénéité de la polarisation du faisceau sur le substrat ne permet pas d'assembler le substrat avec une lame de matériau non linéaire et de le découper ensuite pour fabriquer collectivement des microlasers doublés en fréquence.

Il existe donc un besoin non encore satisfait pour une cavité laser présentant une direction de polarisation parfaitement contrôlée, connue, et constante sur l'ensemble du substrat en particulier de la lame, jouant le rôle de matériau actif laser.

Il existe en outre un besoin pour une cavité laser et pour un microlaser ayant un direction de polarisation connue, et constante, et qui puissent être obtenues par un procédé éprouvé de fabrication collective sans avoir recours à d'autres étapes, ou utiliser des montages complexes.

L'invention est définie par les revendications 1 et 15.

Le but de l'invention est, entre autres, de répondre à ces besoins, et de fournir une cavité laser et un laser tel qu'un microlaser qui ne présentent pas les inconvénients, défauts et limitations des cavités lasers et des lasers, en particulier, des microlasers de l'art antérieur, et qui résolvent les problèmes de l'art antérieur.

Ce but, et d'autres encore, sont atteints, conformément à l'invention, par une cavité laser à polarisation contrôlée comprenant un substrat en matériau actif laser Y₃Al₅O₁₂ (YAG) dopé ou non, sur lequel est déposé directement par épitaxie en phase liquide ou par un procédé analogue, une couche monocristalline de matériau absorbant saturable en YAG dopé, dans laquelle ledit matériau actif laser est orienté [100], et ladite couche monocristalline de matériau absorbant saturable est déposée suivant la même orientation [100].

Selon l'invention ladite couche monocristalline de matériau absorbant saturable en YAG dopé est obtenue par épitaxie en phase liquide (EPL) ou par un procédé analogue c'est-à-dire par un procédé permettant d'obtenir une couche ayant les mêmes caractéristiques qu'une couche obtenue par EPL, un tel procédé peut être par exemple un procédé de dépôt en phase vapeur ou un procédé de dépôt par ablation laser.

On peut alors, en d'autres termes, parler d'une couche susceptible d'être obtenue par épitaxie en phase liquide.

De préférence toutefois la couche monocristalline de matériau absorbant saturable est obtenue par épitaxie en phase liquide.

La cavité laser selon l'invention dans laquelle le substrat en matériau actif laser est orienté [100] se différencie fondamentalement des cavités de l'art antérieur dans lesquelles les substrats en matériau actif laser YAG sont orientés suivant la direction [111].

En effet, dans le cas notamment de plaques microlasers fabriquées à partir de substrats orientés [111] il apparaît que la direction de polarisation n'est jamais constante sur ces plaques quel que soit le type de pompage.

Au contraire, sur les plaques comprenant un substrat en matériau actif laser YAG orienté [100], selon l'invention, le faisceau peut être polarisé selon deux directions perpendiculaires privilégiées. Sur une telle plaque, selon l'invention, la direction de polarisation du faisceau laser est constante quel que soit la nature de la source de pompage.

Ainsi, si le pompage est fait avec une source non-polarisée la direction de polarisation du faisceau laser émis est constante, tandis que si le pompage est fait avec une source polarisée, la direction de polarisation du faisceau laser émis est également constante et selon l'une des deux directions privilégiées.

Le choix de l'une de ces directions dépend de la direction de polarisation du faisceau de pompe.

Dans tous les cas, la cavité laser selon l'invention, du fait de son orientation spécifique [100] présente une direction de polarisation constante et connue à l'avance pour des conditions de pompage données.

Selon l'invention, le faisceau du laser tel qu'un microlaser est obtenu directement polarisé, sans qu'aucune autre opération ou montage ne soit nécessaire, du seul fait du choix de l'orientation spécifique [100].

De ce fait, les cavités lasers selon l'invention peuvent être facilement fabriquées par un procédé de fabrication collective connu et éprouvé.

Le substrat est selon l'invention un substrat en matériau actif laser Y₃Al₅O₁₂ (YAG) dopé ou non qui est orienté [100].

Le substrat et la couche monocristalline d'absorbant saturable, également orientée [100] sont donc de même structure cristallographique mais il est souvent nécessaire d'ajuster les paramètres de maille du substrat et/ou de la couche monocristalline. Cet ajustement se fait généralement à l'aide des dopants adéquates décrits plus loin dans le cadre de la description détaillée de la couche monocristalline, lesdits dopants étant éventuellement ajoutés dans le bain d'épitaxie sous la forme d'oxyde(s).

Autrement dit, le substrat et la couche, qui comme on l'a déjà indiqué, sont de même structure au point de vue cristallographique, ne se différentient que par leurs différents dopants qui affectent par exemple les propriétés cristallines et/ou optiques de la couche et/ou du substrat, de préférence de la couche.

Selon l'invention, le substrat est un matériau actif laser YAG c'est-à-dire qu'il est dopé ou non, par un ou plusieurs ion(s) lui conférant des propriétés de matériau actif laser et choisi(s) par exemple parmi les ions Nd, Cr, Er, Yb, Ho, Tm, et Ce.

Notons au passage que la plupart des ions utilisés pour conférer au YAG des propriétés de matériau actif laser peuvent être ainsi utilisées pour rendre le YAG amplificateur.

Ainsi le YAG peut être dopé avec des ions actifs Nd (néodyme) ou Yb (Ytterbium) pour une émission autour de 1,06 µm, avec des ions actifs Er (Erbium) pour une émission autour de 1,5 µm, avec des ions actifs Ho (Holmium) ou Tm (Thullium) pour une émission à 2 µm, le YAG peut également être codopé par des ions Er et Yb (Erbium-Ytterbium) pour une émission à 1,5µm, par des ions Tm et Ho (Thullium et Holmium) pour une émission à 2 µm, ou par des ions Er, Yb, et Ce (Erbium, Ytterbium et Cérium) pour une émission à 1,5 µm.

De préférence, le YAG est dopé au néodyme, ce matériau est le matériau laser solide le plus connu et le plus utilisé actuellement.

La proportion du ou des ions dopant(s) est généràlement (en mole) de 0,1 à 10% pour chacun d'entre eux.

Selon une caractéristique fondamentale de l'invention, le substrat en matériau actif laser est spécifiquement orienté [100]. Pour obtenir une telle orientation on peut soit orienter un cristal tiré suivant la direction traditionnelle [111], soit tirer directement un cristal suivant l'orientation [100], ce qui est possible moyennant quelques adaptations des conditions de croissance.

La dimension et la forme du substrat , comme cela est décrit plus loin, sont variables. L'un des avantages de la technique d'épitaxie en phase liquide est précisément qu'elle permet de réaliser des couches d'excellente qualité, quelle que soit la forme, même complexe et la taille du substrat.

Le substrat peut être constitué soit d'un barreau laser classique, soit avantageusement selon l'invention d'un substrat microlaser qui est constitué d'une lame monocristalline d'une épaisseur par exemple de 500 µm à 2 mm de préférence de 0,1 mm à 2 mm. De préférence cette lame est polie avec ses deux faces parallèles.

La couche monocristalline de matériau absorbant saturable en YAG, selon l'invention, présente une structure spécifique qui permet de garder la faisabilité d'un dispositif compact et d'une fabrication collective à bas coût.

Cette structure ne remet pas en cause les propriétés du matériau, mais au contraire permet de les améliorer par utilisation des phénomènes d'ondes guidées dans certains cas.

Les couches monocristallines de matériau absorbant saturable selon l'invention présentent, en outre, tous les avantages inhérents au procédé de croissance par épitaxie en phase liquide (EPL) par lequel elles sont obtenues ou susceptibles d'être obtenues. Ces avantages sont développés de manière plus approfondie dans le document de l'art antérieur cité ci-dessus.

En particulier, il est possible, par ce procédé d'EPL, d'obtenir, des dopages homogènes, par exemple en chrome, terres rares, en métaux de transition, ou en gallium.

Ce paramètre d'homogénéité est un paramètre essentiel lorsque l'on veut optimiser les performances optiques d'un dispositif.

Dans la technique d'épitaxie en phase liquide, selon l'invention, les couches sont réalisées à température constante dans la gamme définie plus loin et présentent, de ce fait, une bonne homogénéité de composition en volume.

Seuls l'interface et la surface de la couche peuvent être éventuellement perturbés, mais alors un léger polissage de la surface permet de s'affranchir de ce défaut.

De plus, l'épitaxie permet d'accéder à des concentrations en dopant beaucoup plus élevées que les procédés classiques de croissance de cristaux massifs, ce qui permet d'utiliser des couches de très faible épaisseur avec les avantages qui en découlent.

L'épitaxie en phase liquide offre, par ailleurs, la possibilité de réaliser des codopages par différents ions, en effet, il est souvent nécessaire d'utiliser plusieurs substitutions pour optimiser les propriétés de la couche épitaxiée, telles que le paramètre de maille, l'indice de réfraction, l'absorption etc...

Par la technique d'épitaxie en phase liquide, il est possible de préparer des couches de compositions complexes à plusieurs cations.

La technique d'épitaxie en phase liquide permet un contrôle aisé de l'épaisseur de la couche déposée, celle-ci a, généralement, une épaisseur de 1 à 500 µm, de préférence de 1 à 200 µm, de préférence encore de 20 à 150 µm, mieux de 50 à 100 µm.

On parlera de « couches minces » pour des épaisseurs généralement de 1 à 150 µm, de préférence de 1 à 100 µm.

la vitesse de croissance étant généralement de l'ordre de 1 µm/mn ; on peut relativement rapidement, c'est-à-dire en l'espace de quelques heures, préparer des couches ayant une épaisseur de 100 µm.

Par couche monocristalline de matériau absorbant saturable en YAG dopé on entend un YAG ayant au moins une substitution par un ion lui conférant des propriétés d'absorbant saturable.

Ainsi le YAG peut-il être dopé par un ou plusieurs ions dopants choisi(s) parmi les ions Chrome (Cr), Erbium (Er), Thullium (Tm) et Holmium (HO).

De préférence, ledit ion dopant est le chrome Cr⁴⁺.

La proportion du ou des dopant(s) conférant au YAG ses propriétés d'absorbants saturable est généralement (en mole) de quelques %, par exemple de 1 à 10 % pour chacun des dopants.

Par ailleurs le YAG est généralement tout d'abord substitué par des ions Mg²⁺ de sorte que la substitution avec les ions actifs tels que les ions Cr⁴⁺ peut s'opérer sans compensation de charge.

C'est-à-dire que dans ce cas le YAG contient en définitive dans la couche autant de moles de Mg²⁺ que de moles de dopant en particulier de Cr⁴⁺.

De même que l'épaisseur, le taux de dopage et la nature du dopant de la couche d'absorbant saturable sont adaptés au laser que l'on veut déclencher afin que la couche monocristalline d'absorbant saturable présente une absorption saturable convenable à la longueur d'onde d'émission du laser.

Par exemple, on choisira du Cr⁴⁺ pour un laser émettant à 1,06 µm, du Er³⁺ pour un laser émettant à 1,5 µm ou encore du Thullium (Tm) ou de l'Holmium (Ho) pour un laser émettant à 2 µm.

De ce fait, à un ion actif laser du matériau actif laser correspondra préférentiellement un ion actif de la couche d'absorbant saturable.

Les couples suivants ion actif laser - ion absorbant saturable conviennent bien : Nd-Cr, Er-Er, Tm-Ho, Yb-Cr.

Selon l'invention le couple Nd-Cr est particulièrement préféré.

La couche monocristalline de matériau absorbant saturable orientée [100], ou le substrat, de préférence la couche, peuvent également comprendre (en outre) au moins un (autre) dopant ou substituant afin d'en modifier l'une ou l'autre de leurs propriétés, par exemple structurales et/ou optiques, telles que l'absorption, l'indice de réfraction et/ou le paramètre de maille.

Ces dopants sont choisis par exemple parmi le gallium et les terres rares non actives, telles que le lutécium, le gadolinium, l'yttrium ; par terres rares non actives on entend généralement des terres rares qui ne communiquent pas des propriétés telles que des propriétés d'émetteur laser, d'amplificateur ou d'AS au YAG.

On pourra ainsi en outre réaliser un codopage des couches avec du Gallium (Ga) et/ou une terre rare non active telle que l'yttrium (Y), et/ou le lutécium (Lu) et/ou le gadolinium.

Un codopage supplémentaire préféré est un codopage Gallium-Lutécium, dans lequel le gallium sert à adapter l'indice, le gallium élargissant par ailleurs la maille du réseau cristallin, cet élargissement est compensé par du Lutécium.

De manière classique la cavité laser comprend en outre un miroir d'entrée et un miroir de sortie. De préférence ces miroirs sont des miroirs dichroïques.

Le miroir d'entrée est déposée directement sur le substrat en matériau actif laser et le miroir de sortie est déposé directement sur la couche monocristalline de matériau absorbant saturable.

La cavité laser selon l'invention peut prendre plusieurs formes chacune correspondant à la forme que peut prendre le substrat en matériau actif laser, on pourra de nouveau à ce propos se reporter au document FR-A-2 712 743.

Ainsi dans le substrat peut-il être un barreau laser ; mais, de préférence, selon l'invention le substrat est un substrat microlaser constitué d'une lame monocristalline, de préférence une lame à faces parallèles polie sur ses deux faces.

L'invention concerne également un procédé de fabrication collective de cavités microlasers déclenchées à polarisation contrôlée.

Ce procédé est sensiblement identique au procédé classique connu de fabrication de microlasers mais il s'en différencie fondamentalement par l'orientation spécifique [100] du substrat en matériau actif laser et de la couche monocristalline de matériau absorbant saturable.

Ce procédé comprend généralement donc les étapes suivantes :
- on fournit un substrat en matériau actif laser Y₃Al₅O₁₂ (YAG) dopé ou non, orienté [100] sous la forme d'une lame à faces parallèles polie sur ses deux faces;
- on dépose sur l'une des faces dudit matériau actif laser Y₃Al₅O₁₂ (YAG), une couche monocristalline de matériau absorbant saturable en YAG dopé, par épitaxie en phase liquide ou par un procédé analogue ;
- on polit la couche monocristalline d'absorbant saturable ainsi déposée ;
- on dépose les miroirs d'entrée et de sortie sur les deux faces polies de la cavité ;
- on découpe l'ensemble substrat-couche monocristalline-miroirs ainsi obtenu.

On obtient ainsi un grand nombre de cavités microlasers (ou microlasers) déclenchées, tous ces microlasers présentent des caractéristiques de polarisation connues et identiques ce qui diminue de ce fait fortement leur coût.

L'invention concerne enfin un laser de préférence un microlaser déclenché à polarisation contrôlé comprenant une cavité telle que décrite ci-dessus de préférence une cavité microlaser ainsi que des moyens de pompage de celle-ci.

De préférence ces moyens de pompage consistent en au moins une lampe ou une diode qui pompe la cavité selon une direction transversale ou longitudinale.

Le procédé selon l'invention du fait, de nouveau de l'orientation spécifique [1,0,0] du substrat et de la couche monocristalline, permet de fabriquer collectivement des microlasers ayant une direction de polarisation connue, ce qui n'avait jamais été réalisé dans l'art antérieur. En effet, le faisceau du microlaser est obtenu directement polarisé sans aucune autre opération ou montage ce qui est compatible avec un procédé de fabrication collective.

Par ailleurs, les performances du microlaser obtenues ne sont absolument pas dégradées, par rapport aux microlasers préparés avec des substrats et couches d'AS classiques orientés [111]. Ce maintien des performances malgré le choix inattendu d'une orientation différente constitue l'un des effets et avantages inattendus de l'invention.

Les performances n'étant pas dégradées permettent de ce fait l'utilisation du microlaser selon l'invention dans de nombreuses applications telles que le doublage de fréquence. Il n'est pas nécessaire de tester individuellement chaque microlaser ou d'utiliser un moyen externe pour déterminer la direction de polarisation puisque tous les microlasers ont des caractéristiques de polarisation connues et identiques.

Outre, la réalisation en particulier de microlasers verts impulsionnels de façon collective, l'invention trouve son application de manière générale dans tous les domaines de l'optique non linéaire et dans tous les cas où un faisceau impulsionnel polarisé linéairement est nécessaire, comme par exemple le doublage de fréquence, la conversion de fréquence tels que le triplage, le quadruplage etc..., et l'oscillation paramétrique optique (OPO).

Les caractéristiques et avantages de l'invention apparaîtront mieux à la lecture de la description qui va suivre donnée à titre purement illustratif et non limitatif.

Ainsi, de manière plus précise, le procédé de l'invention comprend tout d'abord, généralement, une première étape de choix et de préparation du substrat.

Comme mentionné plus haut, le substrat peut être tout substrat sur lequel peut être déposé une couche par exemple une couche mince de YAG, par la technique d'épitaxie en phase liquide, à la condition essentielle dans l'invention, que le matériau dudit substrat soit orienté [100].

Ces substrats ont déjà été pour la plupart décrits ci-dessus.

Le type de laser à réaliser détermine l'ion ou les ions dopant(s) de la couche de YAG déposé, ainsi que le type de YAG utilisé pour le substrat.

Le mode de fonctionnement de ce laser détermine si le substrat doit être constitué d'un matériau actif laser ou non, ainsi que sa forme et ses dimensions.

La dimension et la forme du substrat sont variables, l'un des avantages de la technique d'épitaxie en phase liquide est précisément qu'elle permet de réaliser des couches d'excellente qualité, quelle que soit la forme, même complexe, et la taille du substrat.

Le substrat peut, par exemple, être préparé à partir d'un lingot de YAG dopé ou non, d'un diamètre, par exemple, de 1'' à 2" (inches), c'est-à-dire environ 25 à 50 mm, orienté [100].

Pour obtenir une telle orientation au substrat, on peut, soit orienter un cristal tiré suivant la direction traditionnelle [111], soit tirer directement un cristal suivant l'orientation [100] ce qui est possible moyennant quelques adaptations des conditions de croissance : diminution de la vitesse de tirage, augmentation du temps de refroidissement.

Quel que soit le mode de fabrication des cristaux orientés [100] ils peuvent de toute façon être facilement obtenus sur le marché.

On découpe à partir de ce lingot des substrats, par exemple en forme de lames à faces parallèles à l'aide d'un instrument de coupe adéquate, par exemple à l'aide d'une scie à lame diamantée. Ces substrats en forme de lame peuvent avoir une épaisseur variable par exemple de 500 µm à 2 mm.

On procède ensuite au rodage et au polissage d'au moins une des faces du substrat. Le rodage a pour rôle :
- d'une part, d'enlever la couche d'écrouissage superficielle due à la découpe ;
- d'autre part, éventuellement, de ramener l'épaisseur des lames à l'épaisseur voulue, par exemple dans le cas d'une application laser, cette épaisseur est légèrement supérieure à la spécification du microlaser et est généralement de 100 à 1000 µm.

En effet, l'épaisseur du milieu actif est un paramètre qui conditionne certaines caractéristiques du microlaser, telles que la largeur du spectre et le nombre de modes longitudinaux, notamment.

Les substrats, par exemple les lames rodées et, éventuellement, rapprochées de l'épaisseur voulue, sont ensuite polis avec une qualité optique.

Le polissage concerne au moins une des faces du substrat, mais pour certains types de fonctionnement, par exemple pour un laser guide d'ondes, le substrat peut présenter deux faces parallèles ayant cette qualité de poli.

On parle ainsi de substrat à une face polie, ou à deux faces polies.

Le polissage est réalisé par un procédé mécanochimique afin que la ou les faces polie(s) soi(ent) exempte(s) de tout défaut (inclusion, dislocation, contrainte, rayure, etc.) qui se propagerait dans l'épaisseur de la couche lors de l'épitaxie. Cette qualité de polissage est contrôlée par une attaque chimique appropriée. Le procédé à mettre en oeuvre est sensiblement identique à celui mis au point pour les substrats utilisés dans les techniques classiques d'épitaxie.

Suite à la première étape, de choix et de préparation du substrat, on procède ensuite dans une deuxième étape à la préparation du bain d'épitaxie qui est une solution sursaturée formée d'un solvant et d'un soluté.

Selon l'invention, le bain d'épitaxie est préparé, tout d'abord, en pesant soigneusement un mélange des oxydes PbO - B₂O₃ - le mélange de ces deux oxydes formant le solvant - Y₂O₃ et Al₂O₃ qui forment le soluté.

Le ou les différent(s) dopant(s) est(sont) également, éventuellement, ajouté(s) sous forme d'oxyde(s), par exemple CrO₂ et MgO, il est également parfois nécessaire, pour réaliser la compensation de charges éventuelle, d'ajouter un ou plusieurs autres oxydes tels que les oxydes des éléments cités plus haut.

La concentration en moles % des différents oxydes dans le bain d'épitaxie pour la préparation de YAG non dopé est en mole %, par exemple, de 0,5 à 0,7 mole % de Y₂O₃, de 1,5 à 2,5 mole % de Al₂O₃, de 80 à 90 mole % de PbO, et de 5 à 10 mole % de B₂O₃.

Le ou les oxydes du ou des dopant(s) lorsqu'il(s) est(sont) présent(s) est(sont) dans les proportions indiquées ci-dessus pour chacun d'entre eux c'est-à-dire par exemple 0,5 à 2,0 mole % de CrO₂ et 0,5 à 2,0 mole % de MgO.

Un mélange typique est, à titre d'exemple, constitué de 14 g de Y₂O₃, 15 g de Al₂O₃, 6 g de MgO, 23 g de CrO₂, 1700 g de PbO et 45 g de B₂O₃.

Le mélange soluté, solvant est ensuite fondu dans un dispositif adéquat, par exemple dans un creuset en platine à une température, par exemple, de 900 à 1100°C, par exemple d'environ 1000°C pour former le bain d'épitaxie proprement dit. Le dispositif, tel qu'un creuset, est ensuite placé dans un dispositif classique permettant de réaliser une croissance cristalline par épitaxie en phase liquide.

Ce dispositif est, par exemple, un four d'épitaxie qui est, en particulier, un four à deux zones de chauffe, à gradient de température contrôlé.

De préférence, le substrat est animé d'un mouvement de rotation ou de translation uniforme, ou alterné permettant un dépôt d'une épaisseur homogène.

De même, le bain d'épitaxie peut être agité mécaniquement à l'aide d'un dispositif adéquat, tel qu'un agitateur en platine.

Une broche supportant l'agitateur, ou l'ensemble porte substrat-substrat permet de communiquer les mouvements voulus à l'un ou l'autre.

La troisième étape du procédé est l'étape d'épitaxie proprement dite.

Selon l'invention, l'opération d'épitaxie en phase liquide est réalisée à une température constante dans la plage de 1000°C à 1100°C, ce qui permet d'obtenir une concentration en dopant homogène dans l'épaisseur de la couche de YAG.

On commence, par exemple, à agiter mécaniquement le mélange liquide à une température légèrement supérieure à la température de croissance épitaxiale, par exemple, à environ 1150°C à l'aide du dispositif d'agitation déjà décrit plus haut, tel qu'un agitateur en platine. On abaisse ensuite la température du four jusqu'à la température de trempe qui est, de préférence, encore de 1000 à 1100°C.

Le substrat, par exemple positionné horizontalement est ensuite mis en contact avec le bain d'épitaxie, les substrats à une face polie sont trempés en surface du bain alors que les substrats à deux faces polies sont immergés dans ce bain.

La durée de la mise en contact dépend de l'épaisseur désirée, cette épaisseur pouvant varier dans les plages déjà citées plus haut, c'est-à-dire de 1 à 500 µm, par exemple 100 µm. Les vitesses de croissance sont généralement de l'ordre de 0,5 (???) à 1 µm/mn (???)

Selon l'invention et afin de tenir compte de la différence de comportement entre les substrats orientés [111] de l'art antérieur et les substrats orientés [100] mis en oeuvre dans l'invention, une adaptation des conditions de croissance est nécessaire car l'orientation [100] entraine d'une part une augmentation de la vitesse de croissance et d'autre part une fragilité accrue des cristaux, la durée de la trempe ou durée de mise en contact est légèrement diminuée dans le procédé de l'invention et sera donc généralement diminué d'environ 1/4 de temps par rapport aux substrats orientés [111]

Par ailleurs et de nouveau pour prendre en considération la différence de comportement entre les substrats orientés [111] et [100] les phases de refroidissement sont particulièrement contrôlées pour diminuer au maximum les chocs thermiques : remontée lente du substrat hors du four à une vitesse de 10 mm par minute au lieu de 50 mm par minute.

A la sortie du bain d'épitaxie, le substrat et la (pour un substrat à une face) ou les couche(s) épitaxiée(s) (pour un substrat à deux faces, avec une couche épitaxiée sur chaque face) subissent une opération destinée à éliminer le solvant. Par exemple, le substrat revêtu est soumis à un mouvement de rotation accélérée pour éjecter les restes de solvant.

Un nettoyage chimique, au moyen par exemple d'un acide tel que HNO₃ termine l'étape d'épitaxie.

Les étapes suivantes sont des étapes classiques analogues à celles mises en oeuvre pour la réalisation des microlasers orientés [1,1,1].

On effectue un polissage de la couche d'absorbant saturable afin notamment d'ajuster ses propriétés d'absorption. Ce polissage est généralement réalisé par attaque chimique par exemple dans de l'acide phosphorique ou par polissage mécanochrimique.

On dépose ensuite directement les miroirs d'entrée et de sortie de la cavité laser et l'on découpe l'ensemble formé par le substrat en forme de lame, la couche monocristalline de matériau absorbant saturable, et les miroirs, en un grand nombre de cavités microlasers sous la forme par exemple de parallélépipèdes généralement de 1mm x 1 mm donc chacun constitue une cavité microlaser déclenché, à polarisation parfaitement contrôlée.

Il a été constaté que les performances des microlasers obtenus telles que l'énergie de la pulsation laser, sa durée, et sa fréquence de répétition, ne sont pas dégradées.

## Revendications

1. Cavité laser à polarisation controlée comprenant un substrat en matériau actif laser Y₃Al₅O₁₂ (YAG) dopé ou non, sur lequel est déposé directement par épitaxie en phase liquide ou par un procédé analogue, une couche monocristalline de matériau absorbant saturable en YAG dopé, dans laquelle ledit matériau actif laser est orienté [100], et ladite couche monocristalline de matériau absorbant saturable est déposée suivant la même orientation [100].

2. Cavité laser selon la revendication 1 dans laquelle ladite couche monocristalline de matériau absorbant saturable dopé est obtenue par épitaxie en phase liquide (EPL).

3. Cavité selon l'une quelconque des revendications 1 et 2 dans laquelle le substrat est un matériau actif laser YAG dopé par un ou plusieurs ion(s) dopant(s) lui conférant des propriétés de matériau actif laser choisis parmi les ions Nd, Cr, Er, Yb, Ho, Tm, et Ce.

4. Cavité selon la revendication 3 dans laquelle ledit ion dopant est le Néodyme (Nd).

5. Cavité selon l'une quelconque des revendications 3 à 4 dans laquelle la proportion du ou des ion(s) dopant(s) est de 0,1 à 10 mole % pour chacun d'entre eux.

6. Cavité laser selon l'une quelconque des revendications 1 à 5 dans laquelle la couche monocristalline de matériau absorbant saturable est en YAG dopé par un ou plusieurs ion(s) dopant(s) choisi(s) parmi les ions Chrome (Cr), Erbium (Er), Thullium (Tm) et Holmium (Ho).

7. Cavité laser selon la revendication 6 dans laquelle ledit ion dopant est le chrome.

8. Cavité selon l'une quelconque des revendications 6 et 7 dans laquelle la proportion du ou des ion(s) dopant(s) est de 1 à 10 mole % pour chacun d'entre eux.

9. Cavité selon l'une quelconque des revendications 1 à 8 dans laquelle la couche et/ou le substrat sont (en outre) dopé(s) par au moins un (autre) dopant ou substituant permettant de modifier leurs propriétés structurales et/ou optiques.

10. Cavité selon la revendication 9 dans laquelle ledit (autre) dopant est choisi parmi le gallium et les terres rares non actives.

11. Cavité selon l'une quelconque des revendications 1 à 10 dans laquelle la couche monocristalline de matériau absorbant saturable a une épaisseur de 1 à 500 µm.

12. Cavité selon la revendication 10 dans laquelle ladite couche monocristalline de matériau absorbant saturable est une couche mince d'une épaisseur de 1 à 150 µm.

13. Cavité laser selon l'une quelconque des revendications 1 à 12 qui comprend en outre un miroir d'entrée et un miroir de sortie, ledit miroir d'entrée étant déposé directement sur le substrat en matériau actif laser.

14. Cavité laser selon la revendication 12 dans laquelle le miroir de sortie est déposé directement sur la couche monocristalline de matériau absorbant saturable.

15. Procédé de fabrication collective de cavités microlasers déclenchées à polarisation contrôlée comprenant les étapes suivantes :
- on fournit un substrat en matériau actif laser Y₃Al₅O₁₂ (YAG) dopé ou non, orienté [100] sous la forme d'une lame à faces parallèles polie sur ses deux faces;
- on dépose sur l'une des faces dudit matériau actif laser Y₃Al₅O₁₂ (YAG), une couche monocristalline de matériau absorbant saturable en YAG dopé suivant la même orientation [100], par épitaxie en phase liquide ou par un procédé analogue ;
- on polit la couche monocristalline d'absorbant saturable ainsi déposée ;
- on dépose les miroirs d'entrée et de sortie sur les deux faces polies de la cavité ;
- on découpe l'ensemble substrat-couche monocristalline-miroirs ainsi obtenu.

16. Laser déclenché à polarisation contrôlée comprenant une cavité selon l'une quelconque des revendications 1 à 14 ainsi que des moyens de pompage de cette cavité.

## Patentansprüche

1. Laserresonator mit gesteuerter Polarisation, ein Substrat aus aktivem Lasermaterial Y₃AL₅O₁₂ (YAG) umfassend, dotiert oder nichtdotiert, auf dem durch Flüssigphasen-Expitaxie oder ein analoges Verfahren eine monokristalline Schicht aus dotiertem sättigbarem YAG-Absorptionsmaterial direkt abgeschieden ist, bei dem das genannte aktive Lasermaterial die Orientierung [100] aufweist und die genannte monokristalline Schicht aus sättigbarem Absorptionsmaterial entsprechend derselben Orientierung [100] abgeschieden ist.

2. Laserresonator nach Anspruch 1, bei dem die genannte monokristalline Schicht aus dotiertem sättigbarem Absorptionsmaterial mittels Flüssigphasen-Epitaxie hergestellt ist.

3. Resonator nach einem der Ansprüche 1 und 2, bei dem das Substrat ein aktives YAG-Lasermaterial ist, dotiert mit einem oder mehreren ihm die Eigenschaften eines aktiven Lasermaterials verleihenden Dotierion(en), ausgewählt unter den Nd-, Cr-, Er-, Yb-, Ho-, Tm- und Ce-Ionen.

4. Resonator nach Anspruch 3, bei dem das genannte Dotierion Neodym (Nd) ist.

5. Resonator nach einem der Ansprüche 3 bis 4, bei dem der Anteil des Dotierions oder der Dotierionen 0,1 bis 10 Mol% für jedes von ihnen beträgt.

6. Laserresonator nach einem der Ansprüche 1 bis 5, bei dem die monokristalline Schicht aus sättigbarem, mit einem oder mehreren unter den lonen des Chroms (Cr), Erbiums (Er), Thulliums (Tm) und Holmiums (Ho) ausgewählten Dotierionen dotierten YAG-Absorptionsmaterial ist.

7. Laserresonator nach Anspruch 6, bei dem das genannte Dotierion Chrom ist.

8. Resonator nach einem der Ansprüche 6 und 7, bei dem der Anteil des Dotierions oder der Dotierionen 1 bis 10 Mol% für jedes von ihnen beträgt.

9. Resonator nach einem der Ansprüche 1 bis 8, bei dem die Schicht und/oder das Substrat (außerdem) durch wenigstens einen (anderen bzw. weiteren) Dotierstoff oder Substituenten dotiert werden, der ermöglicht, ihre strukturellen oder optischen Eigenschaften zu modifizieren.

10. Resonator nach Anspruch 9, bei dem der genannte (andere) Dotierstoff ausgewählt wird unter Gallium und den nichtaktiven Seltenerdmetallen.

11. Resonator nach einem der Ansprüche 1 bis 10, bei dem die monokristalline Schicht aus sättigbarem Absorptionsmaterial eine Dicke von 1 bis 500 µm hat.

12. Resonator nach Anspruch 10, bei dem die genannte monokristalline Schicht aus sättigbarem Absorptionsmaterial eine Dicke von 1 bis 150 µm hat.

13. Laserresonator nach einem der Ansprüche 1 bis 12, der außerdem einen Eingangsspiegel und einen Ausgangsspiegel umfasst, wobei der Eingangsspiegel direkt auf dem Substrat aus aktivem Lasermaterial abgeschieden ist.

14. Laserresonator nach Anspruch 12, bei dem der Ausgangsspiegel direkt auf der monokristallinen Schicht aus sättigbarem Absorptionsmaterial abgeschieden ist.

15. Verfahren zur Kollektiv- bzw. Sammelherstellung von gütegeschalteten Mikrolaserresonatoren mit geregelter Polarisation, das die folgenden Schritte umfasst:
- man stellt ein Substrat aus dotiertem oder nichtdotiertem aktivem Material Y₃Al₅O₁₂ (YAG) der Orientierung [100] bereit, das die Form eines Plättchens mit parallelen Flächen bzw. Seiten aufweist und dessen beiden Flächen bzw. Seiten poliert sind;
- man scheidet durch Flüssigphasen-Epitaxie oder ein analoges Verfahren auf einer der Flächen des genannten aktiven Lasermaterials Y₃Al₅O₁₂ (YAG) eine monokristalline Schicht aus dotiertem sättigbarem YAG-Absorptionsmaterial ab, entsprechend derselben Orientierung [100];
- man poliert die derart abgeschiedene monokristalline Schicht aus sättigbarem Absorptionsmaterial;
- man scheidet den Eingangs- und Ausgangsspiegel auf den beiden polierten Flächen des Resonators ab;
- man zerschneidet das derart hergestellte, durch das Substrat, die monokristalline Schicht und die Spiegel gebildete Ganze.

16. Gütegeschalteter Laser mit gesteuerter Polarisation, einen Resonator nach einem der Anspruche 1 bis 14 sowie Pumpeinrichtungen dieses Resonators umfassend.

## Claims

1. Laser cavity with controlled polarization containing a substrate made of a doped or undoped active laser material Y₃Al₅O₁₂ (YAG) on which a monocrystalline layer of saturable absorbent material made of doped YAG is deposited directly by liquid phase epitaxy or by a similar process, in which the said active laser material has a [100] orientation, and the said monocrystalline layer of saturable absorbent material is deposited with the same [100] orientation.

2. Laser cavity according to claim 1, in which the said monocrystalline layer of doped saturable absorbent material is obtained by liquid phase epitaxy (LPE).

3. Laser cavity according to either of claims 1 or 2, in which the substrate is a YAG active laser material, doped by one or several doping ion(s) that confer active laser material properties on it, and for example chosen among the Nd, Cr, Er, Yb, Ho, Tm, and Ce ions.

4. Cavity according to claim 3, in which the doping ion is neodymium (Nd).

5. Cavity according to either of claims 3 or 4, in which the proportion of the doping ion(s) is 0.1 to 10 moles % for each ion.

6. Laser cavity according to any one of claims 1 to 5 in which the monocrystalline layer of a saturable absorbent material is a YAG doped with one or several doping ions chosen among Chromium (Cr), Erbium (Er), Thulium (Tm), and Holmium (HO) ions.

7. Laser cavity according to claim 6, in which the said doping ion is Chromium.

8. Laser cavity according to either of claims 6 or 7, in which the proportion of the doping ion(s) is 1 to 10 moles % for each doping ion.

9. Cavity according to any one of claims 1 to 8 in which the layer and/or the substrate are (also) doped with at least one (other) doping agent or substitute in order to modify their structural and/or optical properties.

10. Cavity according to claim 9, in which the said (other) doping ion is chosen among gallium and inactive rare earths.

11. Cavity according to any one of claims 1 to 10, in which the thickness of the monocrystalline layer of saturable absorbent material is between 1 and 500 µm.

12. Cavity according to claim 10, in which the said monocrystalline layer of saturable absorbent material is a thin layer with a thickness of between 1 and 150 µm.

13. Laser cavity according to any one of claims 1 to 12, which also comprises an entry mirror and an exit mirror, the said entry mirror being directly deposited on the substrate made of an active laser material.

14. Laser cavity according to claim 12, in which the exit mirror is directly deposited on the monocrystalline layer made of a saturable absorbent material.

15. Process for the collective manufacture of triggered microlaser cavities with controlled polarization comprising the following steps:
- a substrate made of a doped or undoped Y₃Al₅O₁₂ (YAG) active laser material with a [100] orientation is supplied in the shape of a sheet with parallel faces polished on its two faces;
- a monocrystalline layer of doped YAG saturable absorbent material is deposited on one of the faces of the said Y₃Al₅O₁₂ (YAG) active laser material in accordance with the same [100] orientation, by liquid phase epitaxy or by a similar process;
- the saturable absorbent monocrystalline layer thus deposited is polished;
- the entry and exit mirrors are deposited on the two polished faces of the cavity;
- the substrate-monocrystalline layer- mirrors complex thus obtained is cut out.

16. Triggered laser with controlled polarization comprising a cavity like the cavity according to any one of claims 1 to 14, and pumping means for this cavity.
